# EUROPEAN PATENT SPECIFICATION

(11) **EP 4 489 449 B1**
(45) Date of publication and mention of the grant of the patent: **11.11.2026**
(21) Application number: 23762728.6
(22) Date of filing: 14.02.2023
(51) Int. Cl.: H04W 4/48, H04W 4/80

(54) **VEHICLE-BASED INFORMATION INTERACTION METHOD, AND MOBILE PHONE TERMINAL AND HEAD UNIT TERMINAL**
FAHRZEUGBASIERTES INFORMATIONSINTERAKTIONSVERFAHREN SOWIE MOBILTELEFON UND KOPFEINHEITSENDGERÄT
PROCÉDÉ D'INTERACTION D'INFORMATIONS BASÉ SUR UN VÉHICULE, TERMINAL DE TÉLÉPHONE MOBILE ET TERMINAL D'UNITÉ DE TÊTE

(30) Priority: 03.03.2022 CN 202210210382
(43) Date of publication of application: 08.01.2025
(73) Proprietor: Great Wall Motor Company Limited, Baoding, Hebei 071000 (CN)
(72) Inventor: TIAN, Wenjun, Baoding, Hebei 071000 (CN); ZHANG, Guangkun, Baoding, Hebei 071000 (CN); YIN, Junxue, Baoding, Hebei 071000 (CN)
(74) Representative: Klunker IP Patentanwälte PartG mbB
(86) International application number: PCT/CN2023/075891
(87) International publication number: WO 2023/165327

(56) References cited:
- CN-A- 110 455 308
- CN-A- 112 954 648
- CN-A- 115 226 070
- CN-A- 115 250 447
- US-A1- 2006 064 239
- US-A1- 2014 280 580
- US-A1- 2020 075 006
- US-B2- 11 228 886

## Description

### TECHNICAL FIELD

The present invention relates to the field of intelligent vehicles, and in particular to a vehicle-based information interaction method, a mobile terminal and a vehicle terminal.

### BACKGROUND

With the increasing popularity of intelligent vehicles and the comprehensive coverage of smart terminals (mobile phones, tablets, laptops, etc.) for various user groups, the interconnection and interaction between vehicles with the mobile phones, as well as between vehicles themselves, has become more and more common. Moreover, as young people gradually become a main group of car buyers, interaction configurations between the vehicles with the mobile phones, the vehicles with the vehicles, and other smart terminals are personalized and diversified, and the vehicles and the mobile phones are also developing rapidly in the direction of complete interconnection and mutual compatibility.

At present, existing information interaction configurations between mobile phones with vehicles are only aimed at information interactions between mobile phones of vehicle owners with vehicles of the vehicle owners, and mobile phones of users related to the vehicle owners (such as family members of the vehicle owners) cannot interact with the vehicles of the vehicle owners.

Therefore, how to ensure that mobile phones of non-vehicle owners may interact with the vehicles has become an urgent problem to be resolved in this field.

CN 112 954 648 A and US 2023/0410809 A1 relate to the field of terminals, and in particular, to a method for interaction between a mobile terminal and an in-vehicle terminal, a terminal, and a corresponding system. The mobile terminal establishes a communication connection to an in-vehicle terminal, receives first information sent by the in-vehicle terminal, where the first information indicates to execute a first function, determines a first indication based on the first information, and sends the first indication to the in-vehicle terminal, where the first indication indicates the in-vehicle terminal to obtain second information, receives the second information sent by the in-vehicle terminal, and executes the first function based on the second information. Correspondingly, the in-vehicle terminal receives a first input of a first user, where the first input indicates to execute a first function, sends first information corresponding to the first input to a mobile terminal, receives a first indication sent by the mobile terminal, where the first indication is determined by the mobile terminal based on the first information; and the in-vehicle terminal obtains second information based on the first indication, and sends the second information to the mobile terminal, where the second information is used by the mobile terminal to execute the first function.

US 11 228 886 B2 relates to integration of mobile device operations with a vehicle information system and display and provides a system, apparatus and methods for integrating mobile device operations with an in-vehicle information system in a manner that enables the context of various mobile device applications to be persisted from the mobile device to the in-vehicle information system, and vice versa. A mobile device establishes a session with an in-vehicle information system when brought into proximity; its user can then access functions and data on the mobile device using the input/output (I/O) systems provided for the in-vehicle system for effectively 'hands free' use of the mobile device. The in-vehicle information system "mirrors" application user interfaces adapted to the vehicle display and safety constraints, for example for "telephony services," "streaming of audio data," and "map/navigation applications."

### SUMMARY

It is an object of the present invention to provide a mobile terminal side and a vehicle terminal side vehicle-based information interaction method, a corresponding mobile terminal and a corresponding vehicle terminal, and computer-readable storage medium, with the purpose of ensuring that mobiles of non-vehicle owners interact with vehicles.

In order to achieve the above object, the present invention provides the following technical solutions: vehicle-based information interaction method executed by a mobile terminal with the feature of independent claim 1, a mobile terminal with the features of independent claim 5 and computer-readable storage medium with the features of independent claim 6. Further embodiments are defined in the respective dependent claims.

The technical solution provided by the present invention when executed by the mobile terminal, allows the user to trigger the interaction between the mobile application and the vehicle terminal by the activation operation. Whilst, during the interaction, the vehicle terminal sends the first interaction request to the mobile application to enable the mobile terminal to control the mobile application to perform the operations corresponding to the state of the mobile application, and the mobile terminal sends the second interaction request to the vehicle terminal based on the preset mobile application to enable the vehicle terminal to perform the response operations corresponding to the state of the vehicle, thereby realizing the effective interaction between the mobile terminal of a non-vehicle owner and the vehicle, providing a novel interaction method for the vehicle, and enriching the user experience of the vehicle.

### BRIEF DESCRIPTION OF THE DRAWINGS

To more clearly illustrate the technical solutions of the present invention or in prior art, a brief introduction will now be given to the appended drawings that are necessary for the description of the invention or the prior art.
FIG. 1 is a flowchart of a vehicle-based information interaction method;
FIG. 2 is a flowchart of another vehicle-based information interaction method;
FIG. 3 is a flowchart of another vehicle-based information interaction method;
FIG. 4 is a flowchart of another vehicle-based information interaction method;
FIG. 5 is a flowchart of another vehicle-based information interaction method;
FIG. 6 is a flowchart of another vehicle-based information interaction method;
FIG. 7 is a schematic structural diagram of a mobile terminal; and
FIG. 8 is a schematic structural diagram of a vehicle terminal.

### DETAILED DESCRIPTION

The following will combine the appended drawings of the present disclosure to provide a clear and complete description of the technical solutions of the present invention.

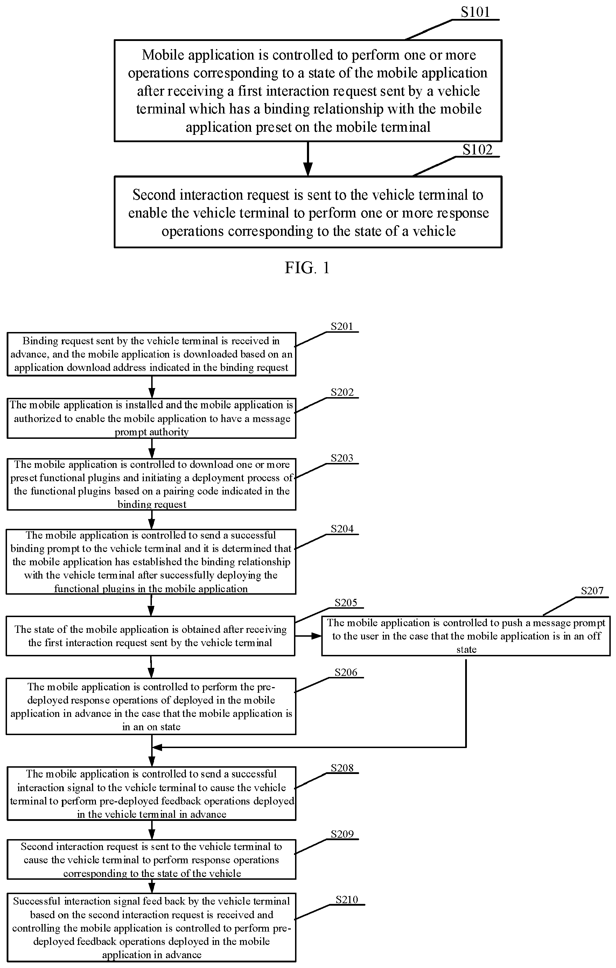

As shown in FIG. 1, FIG. 1 is a flowchart of a vehicle-based information interaction method. The method is applied to a mobile terminal and includes the following steps.

S101, a mobile application is controlled to perform one or more operations corresponding to a state of the mobile application after receiving a first interaction request sent by a vehicle terminal which has a binding relationship with the mobile application preset on the mobile terminal.

The specific implementation principle of controlling the mobile application to perform the operations corresponding to the state of the mobile application after receiving the first interaction request sent by the vehicle terminal which has a binding relationship with the mobile application preset on the mobile terminal may be seen in the explanation of S201-S208 shown in FIG. 2 below.

S102, a second interaction request is sent to the vehicle terminal to enable the vehicle terminal to perform one or more response operations corresponding to the state of a vehicle.

The second interaction request is generated based on the mobile application responding to an activation operation of a user.

It should be noted that the specific implementation principle of sending a second interaction request to the vehicle terminal to cause the vehicle terminal to perform response operations corresponding to the state of the vehicle may be seen in the explanation of S209-S210 shown in FIG. 2 below.

In summary, the user may trigger the interaction between the mobile application and the vehicle terminal by the activation operation. During the interaction, the vehicle terminal sends the first interaction request to the mobile application to enable the mobile terminal to control the mobile application to perform the operations corresponding to the state of the mobile application, and the mobile terminal sends the second interaction request to the vehicle terminal based on the preset mobile application to enable the vehicle terminal to perform the response operations corresponding to the state of the vehicle, thereby realizing the effective interaction between the mobile terminal of a non-vehicle owner and the vehicle, providing a novel interaction method for the vehicle, and enriching the user experience of the vehicle.

As shown in FIG. 2, FIG. 2 is a flowchart of a specific implementation principle of steps S101 and S102 of the vehicle-based information interaction method. The method is applied to a mobile terminal, and includes the following steps.

S201, a binding request sent by the vehicle terminal is received in advance, and the mobile application is downloaded based on an application download address indicated in the binding request.

The vehicle terminal may send a binding request to the mobile terminal via a phone number of the mobile terminal.

Optionally, the vehicle terminal may send a binding request to a preset vehicle backend information server, triggering the vehicle backend information server to send the application download address and pairing code (usually, the communication operator can send a binding request to the mobile terminal in the form of SMS notification) indicated in the binding request to the mobile terminal. Generally speaking, the communication methods between the vehicle terminal, the vehicle backend information server, and the mobile terminal include but are not limited to: 4G network communication, 5G network communication, etc. In other words, the vehicle backend information server may be regarded as a relay station for information interaction between the vehicle terminal and the mobile terminal.

S202, the mobile application is installed and the mobile application is authorized to enable the mobile application to have a message prompt authority.

The authorizing the mobile application to enable it to have message prompt authority ensures that the mobile application may still push message prompt to the user even when it is in an off state. In addition, the specific implementation principle of authorizing the mobile application is common knowledge familiar to persons skilled in this field and will not be repeated here.

S203, the mobile application is controlled to download one or more preset functional plugins and initiating a deployment process of the functional plugins based on a pairing code indicated in the binding request.

The functional plugins include pre-configured response operations and feedback operations.

It should be noted that the response operations deployed by the mobile application may be playing a preset animation (such as colorful heart-shaped animations) and preset prompt tone (such as ding-dong tone, "Ding Dong Sentiments" human voice, etc.), and the feedback operations deployed by the mobile application may be playing preset animations.

S204, the mobile application is controlled to send a successful binding prompt to the vehicle terminal and it is determined that the mobile application has established the binding relationship with the vehicle terminal after successfully deploying the functional plugins in the mobile application.

S205, the state of the mobile application is obtained after receiving the first interaction request sent by the vehicle terminal.

S206, the mobile application is controlled to perform the response operations deployed in the mobile application in advance in the case that the mobile application is in an on state.

After performing S206, S207 is proceeded to perform.

S207, the mobile application is controlled to push a message prompt to the user in the case that the mobile application is in an off state.

After performing S207, S208 is proceeded to perform.

S208, the mobile application is controlled to send a successful interaction signal to the vehicle terminal to cause the vehicle terminal to perform feedback operations deployed in the vehicle terminal in advance.

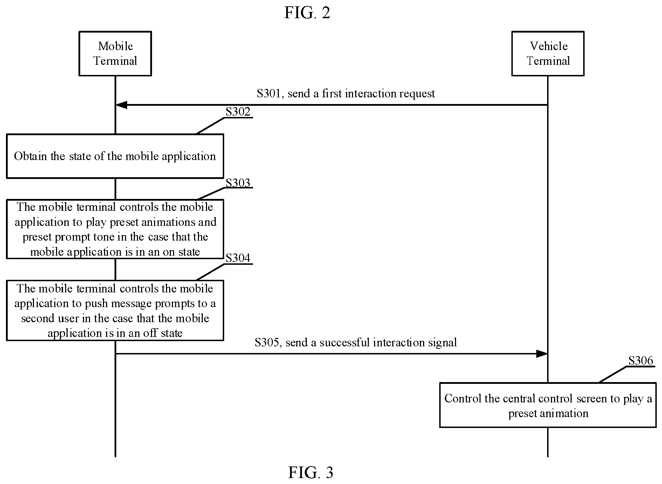

The process shown in S201-S208 is for the mobile terminal to passively interact with the vehicle terminal. In specific applications, the implementation method of the mobile terminal passively interacting with the vehicle terminal may be seen in the process shown in FIG. 3.

S209, a second interaction request is sent to the vehicle terminal to cause the vehicle terminal to perform response operations corresponding to the state of the vehicle.

The second interaction request is generated based on the mobile application responding to an activation operation of a user.

It should be noted that the activation operation of the user for the mobile application includes, but is not limited to, the user triggers operations on the preset interface of the mobile application (for example, drawing a heart-shaped pattern on the preset interface, and clicking on the preset activation button in the mobile application, etc.).

S210, a successful interaction signal fed back by the vehicle terminal based on the second interaction request is received and the mobile application is controlled to perform feedback operations deployed in the mobile application in advance.

The feedback operations deployed in the vehicle terminal in advance may control the central control screen to play a preset animation. The vehicle terminal installs functional plugins to achieve the deployment of feedback operations.

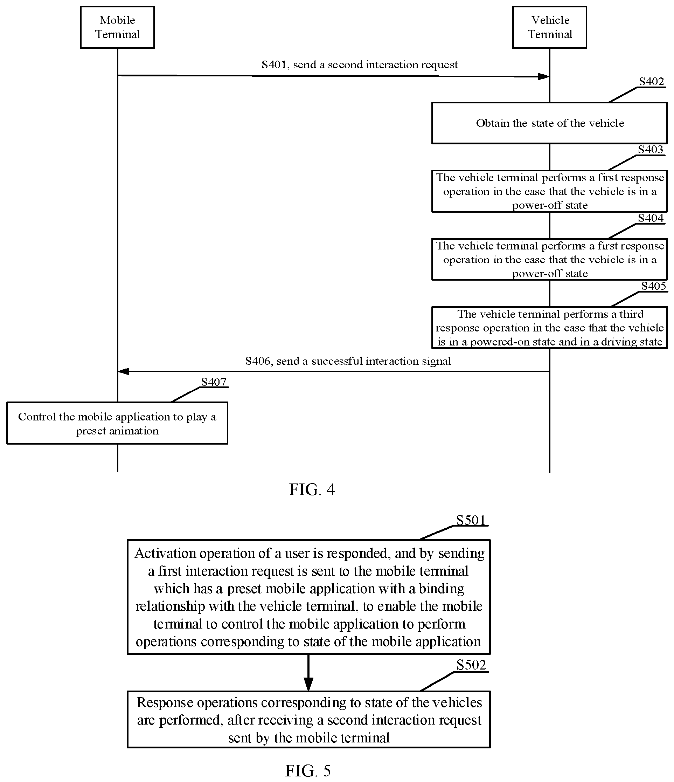

The process shown in S209-S210 is for the mobile terminal to actively interact with the vehicle terminal. In specific applications, the implementation method of the mobile terminal actively interacting with the vehicle terminal may be seen in the process shown in FIG. 4.

In summary, the user may trigger the interaction between the mobile application and the vehicle terminal by the activation operation. During the interaction, the vehicle terminal sends the first interaction request to the mobile application to enable the mobile terminal to control the mobile application to perform the operations corresponding to the state of the mobile application, and the mobile terminal sends the second interaction request to the vehicle terminal based on the preset mobile application to enable the vehicle terminal to perform the response operations corresponding to the state of the vehicle, thereby realizing the effective interaction between the mobile terminal of a non-vehicle owner and the vehicle, providing a novel interaction method for the vehicle, and enriching the user experience of the vehicle.

As shown in FIG. 3, FIG. 3 is a flowchart of another vehicle-based information interaction method. The method includes the following steps.

S301, the vehicle terminal responds to an activation operation of a first user and sends the first interaction request to the mobile terminal which has a preset mobile application with a binding relationship with the vehicle terminal.

The activation operation of the first user includes but is not limited to: gesture activation (that is, making a preset gesture to a preset camera), voice activation (that is, speaking a preset voice to a preset microphone), clicking on a preset shortcut key on the vehicle terminal, and triggering operations on the central control screen, etc. The so-called first user refers to the vehicle owner.

S302, the mobile terminal obtains the state of the mobile application after receiving the first interaction request.

S303, the mobile terminal controls the mobile application to play a preset animation and preset prompt tone in the case that the mobile application is in a on state.

S304, the mobile terminal controls the mobile application to push message prompts to a second user in the case that the mobile application is in an off state.

The so-called second user refers to the user of the mobile terminal.

S305, the mobile terminal controls the mobile application to send a successful interaction signal to the vehicle terminal.

S306, the vehicle terminal controls the central control screen to play a preset animation after receiving the successful interaction signal.

Based on the process shown in S301-S306, effective interaction between the mobile terminal and the vehicle terminal may be achieved.

As shown in FIG. 4, FIG. 4 is a flowchart of another vehicle-based information interaction method. The method includes the following steps.

S401: the mobile terminal sends a second interaction request to the vehicle terminal.

The second interaction request is generated based on the mobile application responding to the activation operation of the second user.

S402, the vehicle terminal obtains the state of the vehicle after receiving the second interaction request.

S403, the vehicle terminal performs a first response operation in the case that the vehicle is in a power-off state.

The first response operation is used to send a notification request to the target mobile application to enable the target mobile application to perform operations corresponding to the state of the target mobile application. The target mobile application is the mobile application installed on the mobile device of the first user.

Specifically, if the target mobile application is in the on state, the target mobile application plays a preset animation and preset prompt tone. If the target mobile application is in the off state, the target mobile application pushes message prompts.

S404, the vehicle terminal performs a second response operation in the case that the vehicle is in a powered-on state and in a static state.

The second response operation is used to control a central control screen to play a preset animation, control a ambient light to work, and control a speaker to play preset prompt tone.

S405, the vehicle terminal performs a third response operation in the case that the vehicle is in a powered-on state and in a driving state.

The third response operation is used to control the central control screen to display preset pop-up windows and control the speaker to play preset prompt tone.

S406, the vehicle terminal sends a successful interaction signal to the mobile terminal with the preset mobile application.

S407, the mobile terminal controls the mobile application to play a preset animation after receiving the successful interaction signal.

Based on the process shown in S401-S407, effective interaction between the mobile terminal and the vehicle terminal may be achieved.

As shown in FIG. 5, FIG. 5 is a flowchart of another vehicle-based information interaction method. The method is applied to the vehicle terminal, and includes the following steps.

S501, an activation operation of a user is responded, and a first interaction request is sent to the mobile terminal which has a preset mobile application with a binding relationship with the vehicle terminal to enable the mobile terminal to control the mobile application to perform operations corresponding to state of the mobile application.

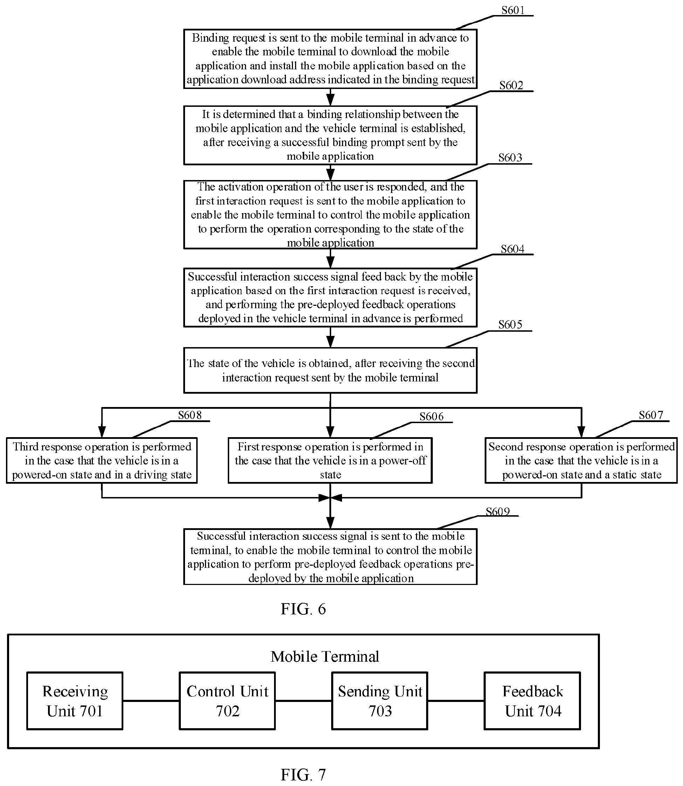

The specific implementation principle of responding to the activation operation of the user and sending a first interaction request to the mobile terminal which has a preset mobile application with a binding relationship with the vehicle terminal, to enable the mobile terminal to control the mobile application to perform operations corresponding to the state of the mobile application, may be seen in the explanation of S601-S603 shown in FIG. 6 below.

S502, response operations corresponding to state of the vehicles are performed after receiving a second interaction request sent by the mobile terminal.

The specific implementation principle of performing response operations corresponding to the state of the vehicle after receiving the second interaction request sent by the mobile terminal may be seen in the explanation of S604-S609 shown in FIG. 6 below.

In summary, users may trigger interaction between the vehicle terminal and the mobile terminal by activation operations. During the interaction process, the vehicle terminal sends a first interaction request to the mobile application to enable the mobile application to perform pre-deployed response operations, and based on the second interaction request sent to the vehicle terminal by the mobile terminal with the preset mobile application, to cause the vehicle terminal to perform response operations corresponding to the state of the vehicle, thereby achieving effective interaction between the mobile terminal not belonging to the car owner and the vehicle, providing a novel interaction method for the vehicle, and enriching the user experience of the vehicle.

As shown in FIG. 6, FIG. 6 is a flowchart of another vehicle-based information interaction method. The method is applied to the vehicle terminal, and includes the following steps.

S601, a binding request is sent to the mobile terminal in advance to enable the mobile terminal to download the mobile application and install the mobile application based on the application download address indicated in the binding request.

S602, it is determined that a binding relationship between the mobile application and the vehicle terminal is established, after receiving a successful binding prompt sent by the mobile application.

S603, the activation operation of the user is responded, and the first interaction request is sent to the mobile application to enable the mobile terminal to control the mobile application to perform the operation corresponding to the state of the mobile application.

S604, a successful interaction signal fed back by the mobile application based on the first interaction request is received, and feedback operations deployed in the vehicle terminal in advance is performed.

S605, the state of the vehicle is obtained after receiving the second interaction request sent by the mobile terminal.

S606, a first response operation is performed in the case that the vehicle is in a power-off state.

The first response operation is used to send a notification request to the target mobile application to enable the target mobile application to perform operations corresponding to the state of the target mobile application; and the target mobile application is a mobile application installed on the mobile device of the user.

S607, a second response operation is performed in the case that the vehicle is in a powered-on state and a static state.

The second response operation is used to control a central control screen to play a preset animation, control an ambient light to work, and control a speaker to play preset prompt tone.

S608, a third response operation is performed in the case that the vehicle is in a powered-on state and in a driving state.

The third response operation is used to control the central control screen to display preset a pop-up window and control the speaker to play a preset prompt tone.

S609, a successful interaction signal is sent to the mobile terminal to enable the mobile terminal to control the mobile application to perform feedback operations pre-deployed by the mobile application.

In summary, users may trigger interaction between the vehicle terminal and the mobile terminal by activation operations. During the interaction process, the vehicle terminal sends a first interaction request to the mobile application to enable the mobile application to perform pre-deployed response operations, and based on the second interaction request sent to the vehicle terminal by the mobile terminal with the preset mobile application, to cause the vehicle terminal to perform response operations corresponding to the state of the vehicle, thereby achieving effective interaction between the mobile terminal not belonging to the car owner and the vehicle, providing a novel interaction method for the vehicle, and enriching the user experience of the vehicle.

Based on the vehicle-based information interaction methods mentioned in the above , the present invention also provides a corresponding mobile terminal and a corresponding vehicle terminal.

As shown in FIG. 7, FIG. 7 is a schematic structural diagram of a mobile terminal. The mobile terminal includes the following units.

A receiving unit 701 configured to control a mobile application to perform one or more operations corresponding to a state of the mobile application after receiving a first interaction request sent by a vehicle terminal which has a binding relationship with the mobile application preset on the mobile terminal.

The receiving unit 701 is specially configured to receive a binding request sent by the vehicle terminal in advance, and download the mobile application based on an application download address indicated in the binding request; install the mobile application and authorize the mobile application to enable the mobile application to have a message prompt authority; control the mobile application to download one or more preset functional plugins and initiate a deployment process of the functional plugins based on a pairing code indicated in the binding request, wherein the functional plugins include pre-configured response operations and feedback operations; control the mobile application to send a successful binding prompt to the vehicle terminal and determine that the mobile application has established the binding relationship with the vehicle terminal after successfully deploying the functional plugins in the mobile application; and control the mobile application to perform the operations corresponding to the state of the mobile application after receiving the first interaction request sent by the vehicle terminal.

The receiving unit 701 is specifically configured to obtain the state of the mobile application after receiving the first interaction request sent by the vehicle terminal which has the binding relationship with the mobile application preset on the mobile terminal; control the mobile application to perform the response operations deployed in the mobile application in advance in the case that the mobile application is in an on state; and control the mobile application to push a message prompt to the user in the case that the mobile application is in an off state.

A control unit 702 configured to control the mobile application to send a successful interaction signal to the vehicle terminal to enable the vehicle terminal to perform feedback operations deployed in the vehicle terminal in advance.

A sending unit 703 configured to send a second interaction request to the vehicle terminal to enable the vehicle terminal to perform one or more response operations corresponding to the state of a vehicle, wherein the second interaction request is generated based on the mobile application responding to an activation operation of a user.

A feedback unit 704 configured to receive a successful interaction signal fed back by the vehicle terminal based on the second interaction request and control the mobile application to perform feedback operations deployed in the mobile application in advance.

In summary, the user may trigger the interaction between the mobile application and the vehicle terminal by the activation operation. During the interaction, the vehicle terminal sends the first interaction request to the mobile application to enable the mobile terminal to control the mobile application to perform the operations corresponding to the state of the mobile application, and the mobile terminal sends the second interaction request to the vehicle terminal based on the preset mobile application to enable the vehicle terminal to perform the response operations corresponding to the state of the vehicle, thereby realizing the effective interaction between the mobile terminal of a non-vehicle owner and the vehicle, providing a novel interaction method for the vehicle, and enriching the user experience of the vehicle.

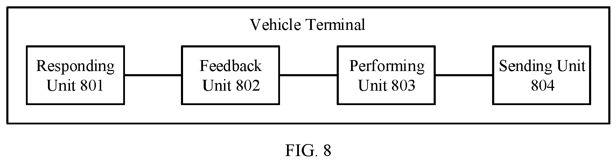

As shown in FIG. 8, FIG. 8 is a schematic structural diagram of a vehicle terminal architecture. The vehicle terminal includes the following units.

A responding unit 801 configured to respond to an activation operation of a user, and send a first interaction request to the mobile terminal which has a preset mobile application with a binding relationship with the vehicle terminal to enable the mobile terminal to control the mobile application to perform one or more operations corresponding to a state of the mobile application.

The responding unit 801 is specially configured to send a binding request to the mobile terminal in advance to enable the mobile terminal to download the mobile application and install the mobile application based on the application download address indicated in the binding request; determine that a binding relationship between the mobile application and the vehicle terminal is established after receiving a successful binding prompt sent by the mobile application; and respond to the activation operation of the user, and send the first interaction request to the mobile application to enable the mobile terminal to control the mobile application to perform the operations corresponding to the state of the mobile application.

A feedback unit 802 configured to receive a successful interaction signal fed back by the mobile application based on the first interaction request and performing feedback operations deployed in the vehicle terminal in advance.

A performing unit 803 configured to perform one or more response operations corresponding to the state of a vehicle after receiving a second interaction request sent by the mobile terminal.

Specifically, the performing unit 803 is configured to obtain the state of the vehicle after receiving the second interaction request sent by the mobile terminal; perform a first response operation in the case that the vehicle is in a power-off state, wherein the first response operation is configured to send a notification request to a target mobile application to enable the target mobile application to perform one or more operations corresponding to a state of the target mobile application, and the target mobile application is a mobile application installed on a mobile device of the user; perform a second response operation in the case that the vehicle is in a powered-on state and in a static state, wherein the second response operation is configured to control a central control screen to play a preset animation, control an ambient light to work, and control a speaker to play a preset prompt tone; and perform a third response operation in the case that the vehicle is in the powered-on state and in a driving state, wherein the third response operation is configured to control the central control screen to display a preset pop-up window and control the speaker to play the preset prompt tone.

A sending unit 804 configured to send a successful interaction signal to the mobile terminal to enable the mobile terminal to control the mobile application to perform the feedback operations deployed in the mobile application in advance.

In summary, users may trigger interaction between the vehicle terminal and the mobile terminal by activation operations. During the interaction process, the vehicle terminal sends a first interaction request to the mobile application to enable the mobile application to perform pre-deployed response operations, and based on the second interaction request sent to the vehicle terminal by the mobile terminal with the preset mobile application, to cause the vehicle terminal to perform response operations corresponding to the state of the vehicle, thereby achieving effective interaction between the mobile terminal not belonging to the car owner and the vehicle, providing a novel interaction method for the vehicle, and enriching the user experience of the vehicle.

The aforementioned units may be implemented by one or more processors.

It is understandable that the processor may be a Central Processing Unit (CPU), or it may also be other general-purpose processors, Digital Signal Processors (DSP), Application Specific Integrated Circuits (ASIC), Field Programmable Gate Arrays (FPGA), or other programmable logic devices, transistor logic devices, hardware components, or any combination thereof. The general-purpose processor may be a microprocessor or any conventional processor.

The present invention also provides a computer-readable storage medium, including stored programs, wherein the programs implement the vehicle-based information interaction method as provided in the above.

If the functions described in the methods of the present invention are realized in the form of software functional units and are sold or used as independent products, they may be stored in a storage medium readable by a computing device. Based on this understanding, the part of the present invention that contributes to the prior art or the part of the technical solution may be embodied in the form of a software product, which is stored in a storage medium and includes several instructions to cause a computing device (which may be a personal computer, server, mobile computing device, or network device, etc.) to execute all or part of the steps described. The aforementioned storage medium includes various media that may store program code, such as USB flash drives, portable hard drives, read-only memory, random-access memory, magnetic disks, or optical discs.

The examples in this document are described in a progressive manner, with each example focusing on its differences from other examples. The same or similar parts between different examples may refer to each other.

## Claims

1. A vehicle-based information interaction method, executed by a mobile terminal, the method comprising:
(S201) receiving a binding request sent by a vehicle terminal in advance, and downloading a mobile application based on an application download address indicated in the binding request;
(S202) installing the mobile application and authorizing the mobile application to enable the mobile application to have a message-prompt authority;
(S203) controlling the mobile application to download one or more preset functional plugins and initiating a deployment process of the functional plugins based on the pairing code indicated in the binding request, wherein the functional plugins comprise pre-configured response operations and feedback operations;
(S204) controlling the mobile application to send a successful binding prompt to the vehicle terminal and determining that the mobile application has established the binding relationship with the vehicle terminal after successfully deploying the functional plugins in the mobile application;
(S206) controlling the mobile application to perform one or more operations corresponding to the state of the mobile application after receiving the first interaction request sent by the vehicle terminal; and
(S209) after the successful binding and deployment of the functional plugins, sending a second interaction request, in response to an activation operation within the mobile application, to the vehicle terminal to enable the vehicle terminal to perform one or more response operations corresponding to the state of a vehicle, wherein the second interaction request is generated based on the mobile application responding to an activation operation of a user.

2. The method according to claim 1, wherein controlling the mobile application to perform the operations corresponding to the state of the mobile application after receiving the first interaction request sent by the vehicle terminal which has the binding relationship with the mobile application preset on the mobile terminal comprises:
obtaining the state of the mobile application after receiving the first interaction request sent by the vehicle terminal which has the binding relationship with the mobile application preset on the mobile terminal;
controlling the mobile application to perform the response operations deployed in the mobile application in advance in the case that the mobile application is in an on state; and
controlling the mobile application to push a message prompt to the user in the case that the mobile application is in an off state.

3. The method according to claim 1 or 2, wherein after controlling the mobile application to perform the one or more operations corresponding to the state of the mobile application after receiving the first interaction request, the method further comprises:
(S208) controlling the mobile application to send a successful interaction signal to the vehicle terminal to enable the vehicle terminal to perform feedback operations deployed in the vehicle terminal in advance.

4. The method according to any one of claims 1 to 3, wherein after sending the second interaction request to the vehicle terminal to enable the vehicle terminal to perform the response operations corresponding to the state of the vehicle, the method further comprises:
(S210) receiving a successful interaction signal fed back by the vehicle terminal based on the second interaction request and controlling the mobile application to perform feedback operations deployed in the mobile application in advance.

5. A mobile terminal, comprising:
a receiving unit (701) configured to:
- receive a binding request sent by a vehicle terminal in advance, the information comprising an application download address and a pairing code, and download a mobile application based on the application download address indicated in the binding request;
- install the mobile application and authorize the mobile application to enable the mobile application to have message-prompt authority;
- control the mobile application to download one or more preset functional plugins and initiate a deployment process of the functional plugins based on the pairing code indicated in the binding request, wherein the functional plugins include pre-configured response operations and feedback operations; and
- control the mobile application to send a successful binding prompt to the vehicle terminal and determine that the mobile application has established a binding relationship with the vehicle terminal after successfully deploying the functional plugins in the mobile application;
- control the mobile application to perform the one or more operations corresponding to the state of the mobile application after receiving the first interaction request sent by the vehicle terminal; and
a sending unit (703) configured to, after the successful binding and deployment of the functional plugins, send a second interaction request, in response to an activation operation within the mobile application, to the vehicle terminal to enable the vehicle terminal to perform one or more response operations corresponding to the state of a vehicle, wherein the second interaction request is generated based on the mobile application responding to an activation operation of a user.

6. A computer-readable storage medium, wherein the computer-readable storage medium comprises stored programs, wherein the programs, when run by a processor, implement the vehicle-based information interaction method according to any one of claims 1 to 4.

## Patentansprüche

1. Fahrzeugbasiertes Informationsinteraktionsverfahren, ausgeführt durch ein Mobilendgerät, wobei das Verfahren aufweist:
(S201) Empfangen einer im Voraus von einem Fahrzeugendgerät gesendeten Bindungsanforderung und Herunterladen einer mobilen Anwendung basierend auf einer Anwendungsdownloadadresse, die in der Bindungsanforderung angegeben ist;
(S202) Installieren der mobilen Anwendung und Autorisieren der mobilen Anwendung, um der mobilen Anwendung zu ermöglichen, eine Nachrichten-Prompt-Berechtigung aufzuweisen;
(S203) Steuern der mobilen Anwendung zum Herunterladen eines oder mehrerer voreingestellter Funktionsplugins und Einleiten eines Bereitstellungsprozesses der Funktionsplugins basierend auf dem Kopplungscode, der in der Bindungsanforderung angegeben ist, wobei die Funktionsplugins vorkonfigurierte Antwortoperationen und Rückmeldeoperationen aufweisen;
(S204) Steuern der mobilen Anwendung zum Senden einer erfolgreichen Bindungsaufforderung an das Fahrzeugendgerät und Bestimmen, dass die mobile Anwendung die Bindungsbeziehung mit dem Fahrzeugendgerät hergestellt hat, nach dem erfolgreichen Bereitstellen der Funktionsplugins in der mobilen Anwendung;
(S206) Steuern der mobilen Anwendung zum Durchführen einer oder mehrerer Operationen, die dem Zustand der mobilen Anwendung entsprechen, nach dem Empfangen der von dem Fahrzeugendgerät gesendeten ersten Interaktionsanforderung; und
(S209) nach der erfolgreichen Bindung und Bereitstellung der Funktionsplugins, Senden einer zweiten Interaktionsanforderung, in Antwort auf eine Aktivierungsoperation innerhalb der mobilen Anwendung, an das Fahrzeugendgerät, um dem Fahrzeugendgerät zu ermöglichen, eine oder mehrere Antwortoperationen durchzuführen, die dem Zustand eines Fahrzeugs entsprechen, wobei die zweite Interaktionsanforderung basierend darauf erzeugt wird, dass die mobile Anwendung auf eine Aktivierungsoperation eines Benutzers antwortet.

2. Verfahren nach Anspruch 1, wobei das Steuern der mobilen Anwendung zum Durchführen der Operationen, die dem Zustand der mobilen Anwendung entsprechen, nach dem Empfangen der von dem Fahrzeugendgerät, welches die Bindungsbeziehung mit der auf dem Mobilendgerät voreingestellten mobilen Anwendung aufweist, gesendeten ersten Interaktionsanforderung aufweist:
Erhalten des Zustands der mobilen Anwendung nach dem Empfangen der von dem Fahrzeugendgerät, welches die Bindungsbeziehung mit der auf dem Mobilendgerät voreingestellten mobilen Anwendung aufweist, gesendeten ersten Interaktionsanforderung;
Steuern der mobilen Anwendung zum Durchführen der im Voraus in der mobilen Anwendung bereitgestellten Antwortoperationen in dem Fall, dass sich die mobile Anwendung in einem eingeschalteten Zustand befindet; und
Steuern der mobilen Anwendung zum Pushen einer Nachrichtenaufforderung an den Benutzer in dem Fall, dass sich die mobile Anwendung in einem ausgeschalteten Zustand befindet.

3. Verfahren nach Anspruch 1 oder 2, wobei das Verfahren nach dem Steuern der mobilen Anwendung zum Durchführen der einen oder mehreren Operationen, die dem Zustand der mobilen Anwendung entsprechen, nach dem Empfangen der ersten Interaktionsanforderung ferner aufweist:
(S208) Steuern der mobilen Anwendung zum Senden eines erfolgreichen Interaktionssignals an das Fahrzeugendgerät, um dem Fahrzeugendgerät zu ermöglichen, im Voraus in dem Fahrzeugendgerät bereitgestellte Rückmeldeoperationen durchzuführen.

4. Verfahren nach einem der Ansprüche 1 bis 3, wobei das Verfahren nach dem Senden der zweiten Interaktionsanforderung an das Fahrzeugendgerät, um dem Fahrzeugendgerät zu ermöglichen, die Antwortoperationen durchzuführen, die dem Zustand des Fahrzeugs entsprechen, ferner aufweist:
(S210) Empfangen eines von dem Fahrzeugendgerät basierend auf der zweiten Interaktionsanforderung zurückgemeldeten erfolgreichen Interaktionssignals und Steuern der mobilen Anwendung zum Durchführen von im Voraus in der mobilen Anwendung bereitgestellten Rückmeldeoperationen.

5. Mobilendgerät, aufweisend:
eine Empfangseinheit (701), die konfiguriert ist zum:
- Empfangen einer im Voraus von einem Fahrzeugendgerät gesendeten Bindungsanforderung, wobei die Information eine Anwendungsdownloadadresse und einen Kopplungscode aufweist, und Herunterladen einer mobilen Anwendung basierend auf der Anwendungsdownloadadresse, die in der Bindungsanforderung angegeben ist;
- Installieren der mobilen Anwendung und Autorisieren der mobilen Anwendung, um der mobilen Anwendung zu ermöglichen, eine Nachrichten-Prompt-Berechtigung aufzuweisen;
- Steuern der mobilen Anwendung zum Herunterladen eines oder mehrerer voreingestellter Funktionsplugins und Einleiten eines Bereitstellungsprozesses der Funktionsplugins basierend auf dem Kopplungscode, der in der Bindungsanforderung angegeben ist, wobei die Funktionsplugins vorkonfigurierte Antwortoperationen und Rückmeldeoperationen aufweisen; und
- Steuern der mobilen Anwendung zum Senden einer erfolgreichen Bindungsaufforderung an das Fahrzeugendgerät und Bestimmen, dass die mobile Anwendung eine Bindungsbeziehung mit dem Fahrzeugendgerät hergestellt hat, nach dem erfolgreichen Bereitstellen der Funktionsplugins in der mobilen Anwendung;
- Steuern der mobilen Anwendung zum Durchführen der einen oder mehreren Operationen, die dem Zustand der mobilen Anwendung entsprechen, nach dem Empfangen der von dem Fahrzeugendgerät gesendeten ersten Interaktionsanforderung; und
eine Sendeeinheit (703), die konfiguriert ist, um nach der erfolgreichen Bindung und Bereitstellung der Funktionsplugins eine zweite Interaktionsanforderung, in Antwort auf eine Aktivierungsoperation innerhalb der mobilen Anwendung, an das Fahrzeugendgerät zu senden, um dem Fahrzeugendgerät zu ermöglichen, eine oder mehrere Antwortoperationen durchzuführen, die dem Zustand eines Fahrzeugs entsprechen, wobei die zweite Interaktionsanforderung basierend darauf erzeugt wird, dass die mobile Anwendung auf eine Aktivierungsoperation eines Benutzers antwortet.

6. Computerlesbares Speichermedium, wobei das computerlesbare Speichermedium gespeicherte Programme aufweist, wobei die Programme, wenn sie von einem Prozessor abgearbeitet werden, das fahrzeugbasierte Informationsinteraktionsverfahren nach einem der Ansprüche 1 bis 4 implementieren.

## Revendications

1. Procédé d'interaction d'informations basée sur un véhicule, exécuté par un terminal mobile, le procédé comprenant :
(S201) la réception d'une requête de liaison qui a été envoyée au préalable par un terminal de véhicule et le téléchargement d'une application mobile sur la base d'une adresse de téléchargement d'application qui est indiquée dans la requête de liaison ;
(S202) l'installation de l'application mobile et l'octroi d'une autorisation à l'application mobile afin de permettre à l'application mobile de disposer d'une autorisation de communication par message ;
(S203) la commande de l'application mobile afin de télécharger un ou plusieurs modules d'extension fonctionnels prédéfinis et l'initiation d'un processus de déploiement des modules d'extension fonctionnels sur la base du code d'appariement qui est indiqué dans la requête de liaison, dans lequel les modules d'extension fonctionnels comprennent des opérations de réponse et des opérations de retour d'information préconfigurées ;
(S204) la commande de l'application mobile afin d'envoyer une communication de liaison réussie au terminal de véhicule et la détermination du fait que l'application mobile a établi la relation de liaison avec le terminal de véhicule après le déploiement réussi des modules d'extension fonctionnels dans l'application mobile ;
(S206) la commande de l'application mobile afin d'effectuer une ou plusieurs opérations qui correspond ou correspondent à l'état de l'application mobile après la réception de la première requête d'interaction qui a été envoyée par le terminal de véhicule ; et
(S209) après la liaison et le déploiement réussis des modules d'extension fonctionnels, l'envoi, en réponse à une opération d'activation au sein de l'application mobile, d'une seconde requête d'interaction au terminal de véhicule afin de permettre au terminal de véhicule d'effectuer une ou plusieurs opérations de réponse qui correspond ou correspondent à l'état d'un véhicule, dans lequel la seconde requête d'interaction est générée sur la base du fait que l'application mobile a répondu à une opération d'activation d'un utilisateur.

2. Procédé selon la revendication 1, dans lequel la commande de l'application mobile afin d'effectuer les opérations qui correspondent à l'état de l'application mobile après la réception de la première requête d'interaction qui a été envoyée par le terminal de véhicule qui dispose de la relation de liaison avec l'application mobile prédéfinie sur le terminal mobile comprend :
l'obtention de l'état de l'application mobile après la réception de la première requête d'interaction qui a été envoyée par le terminal de véhicule qui dispose de la relation de liaison avec l'application mobile prédéfinie sur le terminal mobile ;
la commande de l'application mobile afin d'effectuer les opérations de réponse qui ont été déployées au préalable dans l'application mobile dans le cas où l'application mobile est dans un état activé ; et
la commande de l'application mobile afin de présenter à l'utilisateur une communication par message dans le cas où l'application mobile est dans un état désactivé.

3. Procédé selon la revendication 1 ou 2, dans lequel, après la commande de l'application mobile afin d'effectuer les une ou plusieurs opérations qui correspondent à l'état de l'application mobile après la réception de la première requête d'interaction, le procédé comprend en outre :
(S208) la commande de l'application mobile afin d'envoyer un signal d'interaction réussie au terminal de véhicule pour permettre au terminal de véhicule d'effectuer des opérations de retour d'information qui ont été déployées au préalable dans le terminal de véhicule.

4. Procédé selon l'une quelconque des revendications 1 à 3, dans lequel, après l'envoi de la seconde requête d'interaction au terminal de véhicule afin de permettre au terminal de véhicule d'exécuter les opérations de réponse qui correspondent à l'état du véhicule, le procédé comprend en outre :
(S210) la réception d'un signal d'interaction réussie qui est un retour d'information fourni par le terminal de véhicule sur la base de la seconde requête d'interaction et la commande de l'application mobile afin d'exécuter des opérations de retour d'information qui ont été déployées au préalable dans l'application mobile.

5. Terminal mobile, comprenant :
une unité de réception (701) configurée pour :
- recevoir une requête de liaison qui a été envoyée au préalable par un terminal de véhicule, les informations de la requête de liaison comprenant une adresse de téléchargement d'application et un code d'appariement, et télécharger une application mobile sur la base de l'adresse de téléchargement d'application qui est indiquée dans la requête de liaison ;
- installer l'application mobile et octroyer une autorisation à l'application mobile afin de permettre à l'application mobile de disposer d'une autorisation de communication par message ;
- commander l'application mobile afin de télécharger un ou plusieurs modules d'extension fonctionnels prédéfinis et initier un processus de déploiement des modules d'extension fonctionnels sur la base du code d'appariement qui est indiqué dans la requête de liaison, dans lequel les modules d'extension fonctionnels incluent des opérations de réponse et des opérations de retour d'information préconfigurées ;
- commander l'application mobile afin d'envoyer une communication de liaison réussie au terminal de véhicule et déterminer que l'application mobile a établi une relation de liaison avec le terminal de véhicule après le déploiement réussi des modules d'extension fonctionnels dans l'application mobile ; et
- commander l'application mobile afin d'effectuer les une ou plusieurs opérations qui correspondent à l'état de l'application mobile après la réception de la première requête d'interaction qui a été envoyée par le terminal de véhicule ; et
une unité d'envoi (703) configurée pour, après la liaison et le déploiement réussis des modules d'extension fonctionnels, envoyer, en réponse à une opération d'activation au sein de l'application mobile, une seconde requête d'interaction au terminal de véhicule afin de permettre au terminal de véhicule d'effectuer une ou plusieurs opérations de réponse qui correspond ou correspondent à l'état d'un véhicule, dans lequel la seconde requête d'interaction est générée sur la base du fait que l'application mobile a répondu à une opération d'activation d'un utilisateur.

6. Support de stockage lisible par ordinateur, dans lequel le support de stockage lisible par ordinateur comprend des programmes stockés et dans lequel les programmes, lorsqu'ils sont exécutés par un processeur, mettent en œuvre le procédé d'interaction d'informations basée sur un véhicule selon l'une quelconque des revendications 1 à 4.
